Europäisches Patentamt

European Patent Office

Office européen des brevets

(19)

(11) **EP 0 444 454 B2**

(12) **NEUE EUROPÄISCHE PATENTSCHRIFT**

(45) Veröffentlichungstag und Bekanntmachung des Hinweises auf die Entscheidung über den Einspruch:
**28.04.2004 Patentblatt 2004/18**

(45) Hinweis auf die Patenterteilung:
**30.11.1994 Patentblatt 1994/48**

(21) Anmeldenummer: **91101748.1**

(22) Anmeldetag: **08.02.1991**

(51) Int Cl.$^7$: **C08G 18/08**, C08G 18/10, C08G 18/28, C08G 18/58, C09D 5/00, C09D 175/04

(54) **Lufttrocknende Polyurethanharze, deren Herstellung und Verwendung**

Air-drying polyurethane resins, their preparation and use

Résines de polyuréthane sèchant à l'air, leur préparation et leur utilisation

(84) Benannte Vertragsstaaten:
**AT BE CH DE DK ES FR GB GR IT LI NL SE**

(30) Priorität: **15.02.1990 DE 4004651**

(43) Veröffentlichungstag der Anmeldung:
**04.09.1991 Patentblatt 1991/36**

(73) Patentinhaber: **Surface Specialties Germany GmbH & Co. KG**
**65203 Wiesbaden (DE)**

(72) Erfinder:
• **Schwab, Michael, Dr. Dipl.-Chem.**
**W-6272 Niedernhausen-Oberjosbach (DE)**
• **Walz, Gerd, Dr. Dipl.-Phys.**
**W-6200 Wiesbaden-Breckenheim (DE)**
• **Merten, Gerhard, Dr. Dipl.-Ing.**
**W-6200 Wiesbaden (DE)**

(74) Vertreter: **Deckers, Hellmuth, Dr.**
**European Patent Attorney,**
**Bahnhofstrasse 26/A**
**55218 Ingelheim (DE)**

(56) Entgegenhaltungen:
**EP-A- 0 219 677**    **FR-A- 2 030 803**
**GB-A- 2 127 829**    **JP-A- 610 571**
**US-A- 3 412 054**    **US-A- 4 046 729**
**US-A- 4 066 591**

• **Encyclopedia of Polymer Science and Technology, John Wile and Sons Inc. 13, 1-6 (1970)**
• **Surface Coatings Vol.I, 111-112, Chapman and Hall, London and New York 1983**

**Beschreibung**

Aus Umweltgründen besteht eine wachsende Notwendigkeit, Beschichtungssysteme auf Wasserbasis einzusetzen.

Wäßrige Bindemittel oder Bindemittelkombinationen auf Polymerisatbasis, die physikalisch auftrocknen, konnten sich aber bisher wegen der mangelnden Wasserfestigkeit der daraus hergestellten Beschichtungen und des damit verbundenen, mangelhaften Korrosionsschutzes in der Praxis nicht durchsetzen.

Man hat ferner versucht, acrylmodifizierte Alkydharze als Bindemittel für wasserverdünnbare, lufttrocknende Lacke einzusetzen (siehe unter anderem US-Patentschrift 4.133.786 und GB-Patentschrift 1.117.126). Desgleichen ist die Verwendung von wasserverdünnbaren, urethanmodifizierten Alkydharzen bekannt (siehe unter anderem EP-Offenlegungsschriften 17.199 und 18.665 sowie DE-Offenlegungsschriften 1.745.343 und 2.323.546).

Beide Bindemittelgruppen haben jedoch, auch in Abmischung mit anderen Harzen, spezifische Nachteile. So zeigen die acrylmodifizierten Alkydharze aufgrund der durch Copolymerisation reduzierten Reaktivität der ungesättigten Fettsäuren nur mangelhaften Korrosionsschutz. Die urethanmodifizierten Alkydharze verursachen demgegenüber Probleme wegen schlechter Pigmentbenetzung und/oder mangelhafter Sikkativverträglichkeit. Aufgabe der vorliegenden Erfindung war es daher, die Nachteile des Standes der Technik zu vermeiden und insbesondere ein wasserverdünnbares Bindemittel bzw. Beschichtungssystem zu finden, das einerseits die positiven Eigenschaften der fettsäuremodifizierten Polyurethanharze, wie guten Korrosionsschutz und ausgezeichnete mechanische Eigenschaften aufweist, andererseits aber keine Probleme hinsichtlich der Pigmentierung oder Sikkativierung bereitet.

Überraschenderweise wurde nun gefunden, daß bestimmte wasserdünnbare und lufttrocknende Gruppen enthaltende Polyurethanharze diese Eigenschaften besitzen.

Insbesondere sind Abmischungen dieser erfindungsgemäßen Harze mit handelsüblichen wasserunlöslichen, fettsäuremodifizierten Alkydharzen (die selbst nur sikkativiert einsetzbar sind) auch unsikkativiert rasch durchtrocknend und ergeben Lacke mit ausgezeichnetem Korrosionsschutz.

Die Erfindung betrifft demzufolge eine wäßrige Überzugsmasse, die mindestens ein wasserdispergierbares, lufttrocknende Gruppen enthaltendes Polyurethanharz sowie gegebenenfalls weitere Bindemittelharze und übliche (Lack-) Additive enthält, dadurch gekennzeichnet, daß das Polyurethanharz Bausteine enthält, die sich ableiten von

(A) Polyisocyanaten,
(B) Polyolen, die Gruppen enthalten, die dem resultierenden Polyurethanharz lufttrocknende Eigenschaften verleihen gegebenenfalls
(C) Polyolen, die frei von solchen Gruppen sind,
(D) Verbindungen, die mindestens zwei gegenüber Isocyanatgruppen reaktive Gruppen und mindestens eine zur Anionenbildung befähigte Gruppe aufweisen,
(E) Monoalkoholen, die ungesättigte Gruppen enthalten, und/oder
(F) Verbindungen, die von (B), (C), (D) und (E) verschieden sind und mindestens eine mit NCO-Gruppen reaktive Gruppe enthalten.

Weiterhin bezieht sich die Erfindung auf ein Verfahren zur Herstellung dieser Überzugsmasse sowie deren Verwendung insbesondere zu Grundierungen.

Das erfindungsgemäß verwendete Polyurethanharz besitzt im allgemeinen ein mittleres Molekulargewicht $\overline{M}_n$ (aus der Stöchiometrie des Ausgangsmaterials berechnet) von 1600 bis 30000, vorzugsweise 1600 bis 10000, eine Säurezahl von 10 bis 80, vorzugsweise 25 bis 60 und eine Hydroxyzahl von 0 bis 50, vorzugsweise 0 bis 5. Der Gehalt an ungesättigten Fettsäuren liegt zumeist zwischen 25 und 50, vorzugsweise zwischen 30 und 40 Gew.-%, bezogen auf das Polyurethanharz. Es ist zumindest im alkalischen Milieu auch ohne Anwesenheit eines äußeren Dispergators wasserdispergierbar und bei niedrigen Molekulargewichten unter diesen Bedingungen häufig sogar wasserlöslich. Im allgemeinen sind die Molekülketten dieses Polyurethanharzes überwiegend linear aufgebaut, jedoch kann in manchen Fällen ein geringfügiger Verzweigungsgrad von vorzugsweise bis zu 30 %, insbesondere bis zu 10 % vorhanden sein. Der Gelanteil liegt im allgemeinen bei kleiner als 5 Gew.-%, vorzugsweise kleiner als 1 Gew.-%.

Bei den Polyisocyanaten, vorzugsweise Diisocyanaten entsprechend (A) handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q (NCO)$_2$, wobei Q für einen Kohlenwasserstoffrest mit 4 bis 40 C-Atomen insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclo-hexanisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatoluol bzw. Gemische dieser Isomeren, oder 2,4'-Diisocyanatodiphenylmethan, 4,4'-Diisocyanatodiphenylpropan-(2,2), p-Xylylendiisocyanat α,α,α',α'-Tetra-methyl-m- oder p-Xylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen Isocyanuratgruppen, Urethangruppen, acrylierte Harnstoffgruppen oder Biuretgruppen aufweisen. Bezüglich weiterer geeigneter Polyisocyanate sei beispielsweise auf die DE-Offentegungsschrift 2928 552 verwiesen. Der Anteil an Polyisocyanaten (A) in dem Polyurethanharz liegt in der Regel bei ca. 10 bis 40 Gew.-%, vorzugsweise 10 bis 25 Gew.-%, bezogen auf das Polyurethanharz.

Die ungesättigte Gruppen enthaltenden Polyole, vorzugsweise Diole, entsprechend (B) oder die gegebenenfalls vorhandenen Monoalkohole entsprechend (E) stellen bevorzugt Umsetzungsprodukte von Poly-(Di)epoxiden bzw. Monoepoxiden mit ungesättigten Fettsäuren dar, welche die Gruppen einführen, die dem Polyurethanharz lufttrocknende Eigenschaften verleihen.

Als Polyepoxide, vorzugsweise Diepoxide, und als Monoepoxide kommen insbesondere die auf dem Lackharzgebiet üblichen Vertreter in Betracht.

Eine ausführliche Aufzählung der geeigneten Epoxidverbindungen findet sich beispielsweise in dem Handbuch "Epoxidverbindungen und Epoxidharze" von A.M. Paquin, Springer Verlag, Berlin 1958, Kapitel IV, und in Lee Neville "Handbook of Epoxy Resins", 1967, Chapter 2. Weiterhin sei hier auf die EP-Offenlegungsschriften 272 595 und 286.933 verwiesen.

Es können auch Mischungen von mehreren Epoxidverbindungen verwendet werden.

Das Epoxidäquivalentgewicht dieser Epoxidverbindungen (Poly(Di)- und Monoepoxide) sollte zweckmäßigerweise 180 bis 2000, vorzugsweise 180 bis 500 betragen.

Als Diepoxide werden Polyglycidylester sowie bevorzugt Polyglycidylether von Polyphenolen (Epoxidharze), insbesondere auf Basis von Bisphenol A, eingesetzt. Bevorzugte Vertreter bezüglich der Monoepoxide sind Glycidylether oder Glycidylester mit 4 bis 24 C-Atomen, insbesondere Versaticsäureglycidylester.

Die ungesättigten Fettsäuren zur Einführung der lufttrocknenden Gruppen enthalten im allgemeinen 4 bis 30 vorzugsweise 15 bis 25 C-Atome und weisen anteilig vorzugsweise mindestens zwei Doppelbindungen auf, die isoliert oder vorzugsweise konjugiert sind. Verwiesen sei hierzu auf Wagner/Sarx, Lackkunstharze, 5. Auflage (1971), S. 105-110 sowie auf die DE-OS 1.745.343. Beispiele für derartige ungesättigte Fettsäuren sind: Palmitoleinsäure, Petroselinsäure, Elaidinsäure, Erucasäure, Arachidonsäure, Clupanodonsäure sowie Fettsäuren aus natürlichen Ölen, wie Soja-, Saflor-, Sonnenblumen-, Lupin-, Mais-, Raps-, Sesam-, Baumwollsaat-, Holz-, Ricinus-, Tung-, Perrila-, Lein- und Tallölfettsäure. Weiterhin Fettsäuren, die durch Konjugierung oder Isomerisierung erhalten wurden.

Die Menge an (B) in dem Polyurethanharz beträgt 20 bis 60, vorzugsweise 25 bis 40 Gew.-%, und die von (E) 0 bis 50, vorzugsweise 20 bis 40 Gew.-%, jeweils bezogen auf das Polyurethanharz.

Die gegebenenfalls zum Aufbau der Polyurethanharze eingesetzten Polyole entsprechend (C) sind vorzugsweise niedermolekular und besitzen im allgemeinen ein Molekulargewicht $\overline{M}_n$ von etwa 60 bis 400, vorzugsweise 60 bis 200 und Hydroxylzahlen von beispielsweise 200 bis 1500. Sie können aliphatische, alicyclische oder aromatische Gruppen enthalten. Ihre Menge liegt im allgemeinen bei 0 bis 20, vorzugsweise 0 bis 10, besonders bevorzugt 0 bis 5 Geb.-%, bezogen auf das Polyurethanharz. Genannt seien hier beispielsweise die niedermolekularen Polyole mit bis zu etwa 20 Kohlenstoffatomen je Molekül, z.B. Ethylenglykol, Diethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Bisphenol A (2,2-Bis(hydroxyphenyl)propan), hydriertes Bisphenol A (2,2-Bis(4-hydroxycyclohexyl)propan) sowie deren Mischungen, sowie als Triol Trimethylolpropan.

Für den Baustein (D) geeignete Verbindungen sind beispielsweise in den US-Patentschriften 3 412 054 und 3 640 924 sowie in den DE-Offentegungsschriften 2 624 442 und 2 744 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen geeignet. Beispiele für derartige Verbindungen sind: Dihydroxycarbonsäuren, wie α,α-Dialkylolalkansäure, insbesondere α,α-Dimethylolalkansäure, wie 2,2-Dimethylolessigsäure, 2,2-Dimethylolpropionsäure, 2,2-Dimethylolbuttersäure, 2,2-Dimethylolpentansäure, Dihydroxybernsteinsäure, weiterhin Polyhydroxysäuren, wie Glukonsäure. Besonders bevorzugt ist dabei die 2,2-Dimethylolpropionsäure. Aminogruppenhaltige Verbindungen (D) sind beispielsweise α,ω-Diaminovaleriansäure, 2,2-Diamino-toluol-sulfonsäure-(5) und dergleichen. Es können auch Gemische dieser Verbindungen (D) zum Einsatz kommen. Die Menge an Baustein (D) in dem Polyurethanharz liegt im allgemeinen bei 2 bis 20, vorzugsweise bei 4 bis 10 Gew.-%, bezogen auf das Polyurethanharz.

Zusätzlich zu (E) oder anstelle von (E) kann das erfindungsgemäße Polyurethanharz auch noch Bausteine (F) enthalten, die von den Bausteinen (B), (C), (D) und (E) verschieden sind und mindestens eine mit NCO-Gruppen reaktive Gruppe enthalten.

Hierzu gehören beispielsweise monofunktionelle, mit NCO-Gruppen reaktive Verbindungen (die also als Kettenstopper wirken), wie Monoamine, insbesondere mono-sekundäre Amine, oder Monoalkohole. Genannt seien hier beispielsweise: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignet substituierte Derivate davon, Amidoamine aus di-primären Aminen und Monocarbonsäuren, Monoketimine von di-primären Aminen, primär/tertiäre Amine, wie N,N-Dimethylaminopropylamin.

Weiterhin kommen für (F) Verbindungen in Betracht, die aktiven Wasserstoff mit gegenüber NCO-Gruppen unterschiedlicher Reaktivität enthalten (und in der Regel gleichfalls als Kettenstopper wirken), wie Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren bevorzugt sind. Beispiele hierfür sind: primär/sekundäre Amine, wie 3-Amino-1-Methylaminopropan, 3-Amino-1-Ethylaminopropan, 3-Amino-1-Cydohexylaminopropan, 3-Amino-1-Methylaminobutan; Mono-Hydroxycarbonsäuren, wie Hydroxyesslgsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin.

Schließlich können sich die Bausteine (F) auch von sogenannten Kettenverlängerern ableiten, wenngleich diese Variante weniger bevorzugt ist. Als solche kommen die hierfür bekannten, mit NCO-Gruppen reaktiven und vorzugsweise difunktionellen Verbindungen infrage, die nicht identisch mit (B)/(C) sind und zumeist mittlere Moleculargewichte bis zu 400 aufweisen. Genannt selen hier beispielsweise Wasser, Hydrazin, Poly(Di)amine, wie Ethylendiamln, Diaminopropan, Hexamethylendiamin, die auch Substituenten, wie OH-Gruppen, tragen können. Solche Polyamine sind beispielsweise in der DE-Offenlegungsschrift 36 44 371 beschrieben.

Die Menge an (F) in dem Polyurethanharz liegt üblicherweise zwischen 0 und 10, vorzugsweise 0 und 5 Gew.-%, bezogen auf das Polyurethanharz.

Die Herstellung des erfindungsgemäß eingesetzten Polyurethanharzes erfolgt in der Weise, daß man aus den Polyisocyanaten gemäß (A), den Polyolen gemäß (B) und gegebenenfalls den vorzugsweise niedermolekularen Polyolen gemäß (C) sowie den Verbindungen gemäß (D) zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit den Verbindungen gemäß (E) und/oder (F) in nicht-wäßrigem System umsetzt und das vollständig ausreagierte Polyurethanharz vorzugsweise anschließend neutralisiert und ins wäßrige System überführt.

Die lufttrocknende Gruppen enthaltenden Poly(Di)ole gemäß (B) bzw. Monoalkohole gemäß (E) werden durch Umsatz der entsprechenden Poly(Di)-epoxide bzw. Monoepoxide mit den ungesättigten Carbonsäuren erhalten. Diese Umsetzung wird im allgemeinen bei Temperaturen von 80 bis 120 °C unter Inertgasatmosphäre, vorzugsweise in Abwesenheit von Lösungsmitteln durchgeführt.

Die Herstellung des Polyurethan-Präpolymeren erfolgt dann durch Umsatz der Polyole (B) und der Polyole (D) sowie gegebenenfalls (C) mit den Isocyanaten (A) nach bekannten Verfahren. Hierbei wird das Polyisocyanat (A) gegenüber den Polyolen (B) bis (D) im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polylsocyanat so groß, das das Äquivalentverhältnis von Isocyanatgruppen zur Gesamtzahl der OH-Gruppen in den Polyolen (B) bis (D) 1,05 bis 1,4, vorzugsweise 1,1 bis 1,3 beträgt. Die Reaktionstemperaturen liegen dabei normalerweise zwischen 60 und 95 °C, vorzugsweise zwischen 60 und 75 °C, je nach Reaktivität des eingesetzten Isocyanats. In der Regel erfolgt diese Umsetzung ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Ether, Ketone und Ester sowie N-Methylpyrrolidon. Die Menge dieses Lösungsmittels überschreitet zweckmäßigerweise nicht 20 Gew.-%, und liegt vorzugsweise im Bereich von 5 bis 15 Gew.-%, bezogen auf die Summe aus Polyurethanharz und Lösungsmittel.

Das Präpolymere bzw. dessen Lösung wird dann mit der Verbindung gemäß (E) und/oder (F) umgesetzt, wobei die Temperatur zweckmäßigerweise im gleichen Bereich wie bei der Herstellung des Präpolymeren liegt, bis der NCO-Gehalt in dem Präpolymeren praktisch auf Null abgesunken ist.

Zur Neutralisation des resultierenden, vorzugsweise COOH-Gruppen enthaltenden Produktes sind tertiäre Amine geeignet, z.B. Trialkylamine mit 1 bis 12, vorzugsweise 1 bis 6 C-Atomen in jedem Alkylrest. Beispiele hierfür sind Trimethylamin, Triethylamin, Methyldiethylamin und Tripropyl amin. Die Alkylreste können beispielsweise auch Hydroxylgruppen tragen, wie bei den Dialkylmonoalkanol-, Alkyldialkanol und Trialkanolaminen. Besonders bevorzugt wird Ammoniak als Neutralisationsmittel verwendet. Das Neutralisationsmittel wird zunächst im Molverhältnis zu den COOH-Gruppen des Präpolymers von ca. 0,3:1 bis 1,3:1, vorzugsweise von ca. 0,5:1 bis 1:1 eingesetzt.

Die Neutralisation, die in der Regel zwischen Raumtemperatur und 80 °C, vorzugsweise 40 bis 80 °C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser.

Der Gehalt an Polyurethanharz in der wäßrigen Überzugsmasse beträgt im allgemeinen 5 bis 40, vorzugsweise 15 bis 30 Gew.-%, bezogen auf die gesamte Überzugsmasse.

Neben dem Polyurethanharz kann die wäßrige Überzugsmasse als Bindemittel noch bis zu 60, vorzugsweise 10 bis 40 Gew.-%, bezogen auf das Polyurethanharz, anderer oligomerer oder polymerer, mit dem Polyurethanharz verträglicher Materialien enthalten, wie andere wasserlösliche oder wasserdispergierbare, lufttrocknende Harze oder wasserunlösliche, lufttrocknende Harze, wie Alkydharze. Dadurch kann oftmals eine weitere Verbesserung der lacktechnischen Eigenschaften, wie Härte, Glanz und Korrosionsschutz, erreicht werden.

Im Falle der wasserunlöslichen Harze werden diese bevorzugt vor der Neutralisation in das Polyurethanharz eingebracht.

Dies kann unter Zuhilfenahme von Lösemitteln geschehen, die anschließend wieder destillativ entfernt werden.

Die wäßrige Überzugsmasse gemäß der Erfindung, deren pH-Wert zumeist etwa im Bereich von 6,0 bis 10,0, vorzugsweise 6,8 bis 8,5 liegt, kann noch die üblichen Lackadditive, wie Pigmente und Füllstoffe sowie Lackhilfsmittel, z.B. Antiabsetzmittel, Entschäumungs- und/oder Netzmittel, Verlaufmittel, Reaktiv-Verdünner, Weichmacher, Sikkative (Katalysatoren), Hilfslösemittel, Verdicker enthalten. Zumindest ein Teil dieser Additive kann der Überzugsmasse erst unmittelbar vor der Verarbeitung zugegeben werden. Die Auswahl und die Dosierung dieser Stoffe, die den Einzelkomponenten und/oder der Gesamtmischung zugegeben werden können, sind dem Fachmann bekannt.

Als Pigmente sind beispielsweise Eisenoxide, Bleioxide, Bleisilikate, Titandioxid, Bariumsulfat, Zinkoxid, Zinksulfid, Phthalocyaninkomplexe zu nennen, und als Füllstoffe Glimmer, Kaolin, Kreide, Quarzmehl, Asbestmehl, Schiefermehl, verschiedene Kieselsäuren, Silikate sowie Talkum, inklusive von sog. Mikrotalkum, mit einer Kornfeinheit von maximal 10 μm (vgl. EP-Offenlegungsschrift 249.727). Diese Pigmente und/oder Füllstoffe werden üblicherweise in Mengen von 10 bis 70, vorzugsweise von 30 bis 50 Gew.-%, bezogen auf den Gesamtfestkörpergehalt der Überzugsmasse, eingesetzt.

Als Katalysatoren (Sikkative) kommen hier in Frage: Cobalt-, Blei-, Mangan-, Zirkonsalze, insbesondere Oktoate und Naphthenate. Derartige Katalysatoren sind beispielsweise beschrieben in Ullmanns Encyklopädie der technischen Chemie, 4. Auflage (1983), Bd. 23, Seite 421 bis 424.

Die Hilfslösemittel, beispielsweise Ether, wie Dimethyl(diethyl)glykol, Dimethyl(diethyl)diglykol, Tetrahydrofuran, Ketone wie Methylethylketon, Aceton, Cyclohexanon, Ester, wie Butylacetat, Ethylglykolacetat, Methylglykolacetat, Methoxypropylacetat, Alkohole, wie Ethanol, Propanol und Butanol werden, wenn überhaupt, aus Gründen der Umweltfreundlichkeit nur in möglichst geringer Menge verwendet, die im allgemeinen 10, vorzugsweise 1 bis 5 Gew.-%, bezogen auf Wasser (als dem hauptsächlichen Verdünnungsmittel), nicht überschreitet. Die Menge an Wasser in der wäßrigen Überzugsmasse liegt zumeist bei 15 bis 80 Gew.-%, vorzugsweise 30 bis 60 Gew.-%, bezogen auf die gesamte Überzugsmasse.

Die Herstellung der wäßrigen Überzugsmasse erfolgt nach den üblichen Methoden der Lackherstellung, wie beispielsweise aus der weiter unten angegebenen Richtrezeptur ersichtlich.

Der Auftrag der wäßrigen Überzugsmasse, die mit Wasser unendlich verdünnbar ist und deren Gesamtfestkörpergehalt im allgemeinen 20 bis 70, vorzugsweise 30 bis 50 Gew.-% beträgt, geschieht in bekannter Weise, beispielsweise durch Spritzen nach dem Druckluftverfahren oder mittels luftloser oder elektrostatischer Spritzverfahren. Die Härtung der aufgebrachten Schichten erfolgt im allgemeinen bei Raumtemperatur, wobei bereits nach kurzer Zeit, z.B. nach etwa 30 Minuten eine Staubtrocknung erreicht wird. Gegebenenfalls kann die Härtung auch bei höheren Temperaturen bis zu 120 °C, vorzugsweise 50 bis 80 °C, durchgeführt werden.

Die erfindungsgemäßen Überzugsmassen zeigen ausgezeichnete Pigmentverträglichkeit, und die daraus hergestellten Überzüge weisen guten Korrosionsschutz und gute mechanische Eigenschaften auch ohne Sikkativierung auf. Sie eignen sich daher vor allem für Grundierungen,insbesondere zum Schutz von metallischen Substraten, können aber auch für andere Arten von Beschichtungen Einsatz finden.

Die nachfolgenden Beispiele erläutern die Erfindung.

## I Herstellung der fettsäuremodifizierten Diole (B)/Allgemeine Vorschrift

Diepoxid und ungesättigte Fettsäure werden im Molverhältnis 1:2 vorgelegt und unter $N_2$-Atmosphäre auf 120 °C hochgeheizt. Man rührt so lange bei 110-120 ° C bis die Säurezahl unter 1 gefallen und der EV-Wert über 40.000 gestiegen ist. Das Rohprodukt kann dann ohne weitere Reinigung verwendet werden.

## II Herstellung der fettsäuremodifizierten Monoalkohole (E)/Allgemeine Vorschrift

Das Monoepoxid und die ungesättigte Fettsäure werden im Molverhältnis 1:1 vorgelegt und unter $N_2$-Atmosphäre auf 120 °C hochgeheizt.

Man rührt so lange bei 110-120 °C bis die Säurezahl unter 1 gefallen und der EV-Wert über 40.000 gestiegen ist. Das Produkt kann dann, so wie es anfällt, weiterverwendet werden.

**III Herstellung der Bindemittel**

**Beispiel 1**

189,0 g Umsetzungsprodukt aus Bisphenol-A-Diglycidylether, EV-Wert 183 (®Beckopox EP 140) und Leinölfettsäure, hergestellt nach vorstehender allgemeiner Vorschrift I, wurden mit 40,5 g Dimethylolpropionsäure und 80 g N-Methylpyrrolidon auf 100 ° C hochgeheizt. Man ließ, nachdem alles gelöst war, auf 70 °C abkühlen und dosierte dann 95,7 g Toluylendiisocyanat (Isomerengemisch) so zu, daß die Temperatur 75 °C nicht überstieg. Nach vollständiger Umsetzung der Diolkomponenten wurden 44,2 g Umsetzungsprodukt aus Versaticsäureglycidylester (®Cardura E 10) und Leinölfettsäure, hergestellt nach vorstehender allgemeiner Vorschrift II, zugegeben.
Nach Beendigung der Reaktion wurde das Harz bei 70 °C mit einer Lösung von 161 g $NH_3$ (25 %ig) in 720 g Wasser dispergiert.

**Beispiel 2**

199,2 g Umsetzungsprodukt aus Beckopox EP 140 und Sojaölfettsäure wurden mit 40,2 g Dimethylolpropionsäure und 100 g N-Methylpyrrolidon auf 110 °C erhitzt. Man ließ, nachdem alles gelöst war, auf 70 °C abkühlen und dosierte dann 95,7 g Toluylendiisocyanat (Isomerengemisch) so zu, daß die Temperatur 75 °C nicht überstieg. Nach vollständiger Umsetzung der Diolkomponenten wurden 12,9 g Dibutylamin zugegeben. Nach 20 min. Nachrühren wurde das Harz bei 70 °C mit einer Lösung von 16,3 g $NH_3$ (25 %ig) in 900 g Wasser dispergiert.

**Beispiel 3**

Aus 116,2 g Umsetzungsprodukt aus Beckopox EP 140 und Leinölfettsäure, 35,1 g Dimethylolpropionsäure, 91,4 g Toluylendiisocyanat (Isomerengemisch) und 128,7 g Umsetzungsprodukt aus Cardura E 10 und Leinölfettsäure wurde in 90 g N-Methylpyrrolidon, wie oben beschrieben, ein Polyurethanharz hergestellt. In dieses Harz wurden dann bei 90 bis 100 °C 90,4 g eines wasserunlöslichen, kurzöligen, lufttrocknenden Alkydharzes auf Basis von Öl (Triglycerid), Phthalsäureanhydrid und modifizierenden Harzen, das eine Jodfarbzahl (DIN 6162) von < 25 und eine Säurezahl (DIN 53402) von < 25 besaß, eingerührt. Nach zweistündigem Nachrühren bei 80 ° C wurde das Harz mit einer Lösung von 17,8 g $NH_3$ - (25 %) in 758 g Wasser dispergiert.

**IV Richtrezeptur für Lackzubereitung**

Eine 80 g Bindemittel (fest) entsprechende Menge an Dispersion entsprechend den vorstehenden Beispielen wurde jeweils mit 20 g Eisenoxid, 23 g Zinkphosphat, 23 g Talkum, 14 g Calciumcarbonat, 0,6 g Entschäumer, 1,5 g Antiabsetzmittel und so viel an deionisiertem Wasser in einer Perlmühle dispergiert, daß ein 50 %iger Lack entstand. Nach Spritzapplikation und 14- tägigem Lufttrocknen wurden die beschichteten Stahlbleche ensprechend geprüft (siehe nachstehende Tabelle 1).

**Tabelle 1**

| Beispiel | 1 | 2 | 3 |
|---|---|---|---|
| Lagerstabilität (4 Wochen, 50 °C) | i.O. | i.O. | i.O. |
| Staubtrocknung | 55' | 35' | 35' |
| Pendelhärte nach König (DIN 53157) 24 h | 82'' | 65'' | 37'' |
| 7 d | 100'' | 100'' | 88'' |
| 14 d | 120'' | 120'' | 100'' |
| Salzsprühtest (168; 40 µm Trockenfilm) (DIN 50021) $B_m$ 1) | 2,0 | 2,0 | 3,0 |
| $B_g$ 1) | 1,0 | 1,0 | 1,0 |
| R 2) | 0,5 | 1,0 | 1,0 |
| Tropentest (500 h; 40 µm Trockenfilm) (DIN 50017) $B_m$ 1) | 0 | 0 | 0 |
| $B_g$ 1) | 0 | 0 | 0 |
| R 2) | 0,5 | 0,5 | 0,5 |
| Gitterschnitt (DIN 53151) auf Fe | 0,5 | 0,5 | 0,5 |
| auf Al | 0,5 | 3 | 0,5 |
| auf Zn | 2 | 5 | 3 |
| Erichsentiefung | 8,5 | 7,5 | 8,5 |

$B_m$ = Blasenmenge; $B_g$ = Blasengrad; R = Rostgrad
1) Bestimmt nach DIN 53209
2) Bestimmt nach DIN 53210

## Patentansprüche

**Patentansprüche für folgende Vertragsstaaten : AT, BE, CH, DE, DK, FR, GB, GR, IT, LI, NL, SE**

1. Wäßrige Überzugsmasse, die mindestens ein wasserdispergierbares, lufttrocknende Gruppen enthaltendes Polyurethanharz, sowie gegebenenfalls weiter Bindemittelharze und übliche (Lack-) Additive enthält, **dadurch gekennzeichnet, daß** das Polyurethanharz herstellbar ist durch Umsetzung von

   (A) Polyisocyanaten,
   (B) Polyolen, die Gruppen enthalten, die dem resultierenden Polyurethanharz lufttrocknende Eigenschaften verleihen, und die Umsetzungsprodukte sind von Polyepoxiden oder Diepoxiden mit ungesättigten Fettsäuren, gegebenenfalls
   (C) Polyolen, die frei von solchen Gruppen sind,

(D) Verbindungen, die mindestens zwei gegenüber Isocyanatgruppen reaktive Gruppen und mindestens eine zur Anionenbildung befähigte Gruppe aufweisen,

(E) Monoalkoholen, die ungesättigte Gruppen enthalten, und/oder

(F) Verbindungen, die von (B), (C), (D) und (E) verschieden sind und mindestens eine mit NCO-Gruppen reaktive Gruppe enthalten.

2. Überzugsmasse nach Anspruch 1, **dadurch gekennzeichnet, daß** die Menge an Polyurethanharz in der wäßrigen Überzugsmasse 5 bis 40 Gew.-%, bezogen auf die gesamte Überzugsmasse, beträgt.

3. Überzugsmasse nach Anspruch 1 und/oder 2 , **dadurch gekennzeichnet, daß** das Polyurethanharz ein mittleres Molekulargewicht $M_n$ von 1600 bis 30000 aufweist.

4. Überzugsmasse nach mindestens einem der Ansprüche 1 bis 3, **dadurch gekennzeichnet, daß** die Säurezahl des Polyurethanharzes bei 10 bis 80 liegt.

5. Überzugsmasse nach mindestens einem der Ansprüche 1 bis 4, **dadurch gekennzeichnet, daß** die Menge der Edukte (A) 10 bis 40 Gew.-%, der Edukte (B) 20 bis 60 Gew.-%, der Edukte (C) 0 bis 20 Gew.-%, der Edukte (D) 2 bis 20 Gew.-%, der Edukte (E) 0 bis 50 Gew.-%, und der Edukte (F) 0 bis 10 Gew.-%, jeweils bezogen auf das Polyurethanharz, beträgt, wobei sich die Angaben auf 100 % ergänzen.

6. Überzugsmasse nach mindestens einem der Ansprüche 1 bis 5, **dadurch gekennzeichnet, daß** sich das Edukt (B) von Polyepoxiden mit Epoxidäquivalentgewichten von 180 bis 2000 ableitet.

7. Überzugsmasse nach mindestens einem der Ansprüche 1 bis 6, **dadurch gekennzeichnet, daß** es sich bei den Verbindungen gemäß (D) um Polyole handelt, die wenigstens eine Carboxylgruppe enthalten.

8. Überzugsmasse nach Anspruch 7, **dadurch gekennzeichnet, daß** (D) eine $\alpha,\alpha$-Dimethylolalkansäure enthält.

9. Überzugsmasse nach mindestens einem der Ansprüche 1 bis 8, **dadurch gekennzeichnet, daß** es sich bei den Verbindungen gemäß (F) um Monoamine handelt.

10. Überzugsmasse nach mindestens einem der Ansprüche 1 bis 9, **dadurch gekennzeichnet, daß** es sich bei den Verbindungen gemäß (F) um Monoamine handelt, die noch mindestens eine -OH-Gruppe enthalten.

11. Überzugsmasse nach mindestens einem der Ansprüche 1 bis 10, **dadurch gekennzeichnet, daß** die wäßrige Überzugsmasse noch mindestens ein weiteres Bindemittelharz in einer Menge von bis zu 60 Gew.-%, bezogen auf das Polyurethanharz, enthält.

12. Überzugsmasse nach Anspruch 11, **dadurch gekennzeichnet, daß** es sich bei dem weiteren Bindemittelharz um ein wasserunlösliches, lufttrocknendes Harz handelt.

13. Überzugsmasse nach Anspruch 12, **dadurch gekennzeichnet, daß** es sich bei dem weiteren Bindemittelharz um ein wasserunlösliches, lufttrocknendes Alkydharz handelt.

14. Verfahren zur Herstellung der Überzugsmasse nach mindestens einem der Ansprüche 1 bis 13, **dadurch gekennzeichnet, daß** man aus den Polyisocyanaten gemäß (A), den Polyolen gemäß (B) und gegebenenfalls den Polyolen gemäß (C) sowie den Verbindungen gemäß (D) zunächst ein Polyurethan-Präpolymeres herstellt, das im Mittel mindestens 1,7 freie Isocyanatgruppen pro Molekül enthält, dieses Präpolymere dann mit den Verbindungen gemäß (E) und/oder (F) in nicht-wäßrigem System umsetzt und das vollständig ausreagierte Polyurethanharz anschließend neutralisiert und dann ins wäßrige System überführt, wobei die gegebenenfalls weiteren Bindemittelharze und die üblichen Additive vor, während oder nach der Herstellung des Polyurethanharzes zugegeben werden.

15. Verfahren nach Anspruch 14, **dadurch gekennzeichnet, daß** die Neutralisation der zur Anionenbildung befähigten Gruppen mit Ammoniak erfolgt.

16. Verwendung der Überzugsmasse gemäß mindestens einem der Ansprüche 1 bis 11 zur Herstellung von Grundierungen.

**17.** Substrate, beschichtet mit der Überzugsmasse gemäß mindestens einem der Ansprüche 1 bis 11.


**Patentansprüche für folgenden Vertragsstaat : ES**

**1.** Verfahren zur Herstellung von wäßrigen Überzugsmassen, die mindestens ein wasserdispergierbares, lufttrocknende Gruppen enthaltendes Polyurethanharz, sowie gegebenenfalls weiter Bindemittelharze und übliche (Lack-) Additive enthält, wobei das Polyurethanharz herstellbar ist durch Umsetzung von

(A) Polyisocyanaten,
(B) Polyolen, die Gruppen enthalten, die dem resultierenden Polyurethanharz lufttrocknende Eigenschaften verleihen, und die Umsetzungsprodukte sind von Polyepoxiden oder Diepoxiden mit ungesättigten Fettsäuren, gegebenenfalls
(C) Polyolen, die frei von solchen Gruppen sind,
(D) Verbindungen, die mindestens zwei gegenüber Isocyanatgruppen reaktive Gruppen und mindestens eine zur Anionenbildung befähigte Gruppe aufweisen,
(E) Monoalkoholen, die ungesättigte Gruppen enthalten, und/oder
(F) Verbindungen, die von (B), (C), (D) und (E) verschieden sind und mindestens eine mit NCO-Gruppen reaktive Gruppe enthalten.

**dadurch gekennzeichnet, daß** man aus den Polisocyanaten gemäß (A), den Polyolen gemäß (B) und gegebenenfalls den Polyolen gemäß (C) sowie den Verbindungen gemäß (D) zunächst ein Polyurethan-Präpolymeres herstellt, das im Mittel mindestens 1,7 freie Isocyanatgruppen pro Molekül enthält, dieses Präpolymere dann mit den Verbindungen gemäß (E) und/oder (F) in nicht-wäßrigem System umsetzt und das vollständig ausreagierte Polyurethanharz anschließend neutralisiert und dann ins wäßrige System überführt, wobei die gegebenenfalls weiteren Bindemittelharze und die üblichen Additive vor, während oder nach der Herstellung des Polyurethanharzes zugegeben werden.

**2.** Verfahren nach Anspruch 1, **dadurch gekennzeichnet, daß** die Menge an Polyurethanharz in der wäßrigen Überzugsmasse 5 bis 40 Gew.-%, bezogen auf die gesamte Überzugsmasse, beträgt.

**3.** Verfahren nach Anspruch 1 und/oder 2, **dadurch gekennzeichnet, daß** man Polyurethanharze mit einem mittleren Molekulargewicht $M_n$ von 1600 bis 30000 nimmt.

**4.** Verfahren nach mindestens einem der Ansprüche 1 bis 3, **dadurch gekennzeichnet, daß** man ein Polyurethanharz nimmt, dessen Säurezahl bei 10 bis 80 liegt.

**5.** Verfahren nach mindestens einem der Ansprüche 1 bis 4, **dadurch gekennzeichnet, daß** die Menge der Edukte (A) 10 bis 40 Gew.-%, der Edukte (B) 20 bis 60 Gew.-%, der Edukte (C) 0 bis 20 Gew.-%, der Edukte (D) 2 bis 20 Gew.-%, der Edukte (E) 0 bis 50 Gew.-%, und der Edukte (F) 0 bis 10 Gew.-%, jeweils bezogen auf das Polyurethanharz, beträgt, wobei sich die Angaben auf 100 % ergänzen.

**6.** Verfahren nach mindestens einem der Ansprüche 1 bis 5, **dadurch gekennzeichnet, daß** man als das Edukt (B) Polyepoxide mit Epoxidäquivalentgewichten von 180 bis 2000 nimmt.

**7.** Verfahren nach mindestens einem der Ansprüche 1 bis 6, **dadurch gekennzeichnet, daß** man als Verbindungen gemäß (D) um Polyole nimmt, die wenigstens eine Carboxylgruppe enthalten.

**8.** Verfahren nach Anspruch 7, **dadurch gekennzeichnet, daß** man als Komponente (D) eine $\alpha,\alpha$- Dimethylolalkansäure nimmt.

**9.** Verfahren nach mindestens einem der Ansprüche 1 bis 8, **dadurch gekennzeichnet, daß** man als Verbindungen gemäß (F) Monoamine nimmt.

**10.** Verfahren nach mindestens einem der Ansprüche 1 bis 9, **dadurch gekennzeichnet, daß** man als Verbindungen gemäß (F) Monoamine nimmt, die noch mindestens eine -OH-Gruppe enthalten.

**11.** Verfahren nach mindestens einem der Ansprüche 1 bis 10, **dadurch gekennzeichnet, daß** man der wäßrigen Überzugsmasse noch mindestens ein weiteres Bindemittelharz in einer Menge von bis zu 60 Gew.-%, bezogen auf das Polyurethanharz, zugibt.

12. Verfahren nach Anspruch 11, **dadurch gekennzeichnet, daß** man als weiteres Bindemittelharz ein wasserunlösliches, lufttrocknendes Harz zugibt.

13. Verfahren nach Anspruch 12, **dadurch gekennzeichnet, daß** man als weiteres Bindemittelharz ein wasserunlösliches, lufttrocknendes Alkydharz zugibt.

14. Verfahren nach Anspruch 1, **dadurch gekennzeichnet, daß** die Neutralisation der zur Anionenbildung befähigten Gruppen mit Ammoniak erfolgt.

15. Verwendung der Überzugsmassen, hergestellt gemäß mindestens einem der Ansprüche 1 bis 14, zur Herstellung von Grundierungen.

**Claims**

**Claims for the following Contracting States : AT, BE, CH, DE, DK, FR, GB, GR, IT, LI, NL, SE**

1. An aqueous coating composition which contains at least one water-dispersible polyurethane resin containing air-drying groups and, if desired, further binder resins and conventional (paint) additives, which polyurethane resin can be prepared by reacting

   (A) polyisocyanates,
   (B) polyols containing groups which give the resulting polyurethane resin air-drying properties, and which are reaction products of polyepoxides or diepoxides with unsaturated fatty acids, if desired,
   (C) polyols which are free of such groups,
   (D) compounds having at least two groups which are reactive towards isocyanate groups and at least one group capable of anion formation,
   (E) monoalcohols containing unsaturated groups, and/or
   (F) compounds which differ from (B), (C), (D) and (E) and contain at least one group which is reactive towards NCO groups.

2. A coating composition as claimed in claim 1, wherein the amount of polyurethane resin in the aqueous coating composition is 5 to 40% by weight, relative to the entire coating composition.

3. A coating composition as claimed in claim 1 and/or 2, wherein the polyurethane resin has an average molecular weight $M_n$ of 1,600 to 30,000.

4. A coating composition as claimed in at least one of claims 1 to 3, wherein the acid number of the polyurethane resin is 10 to 80.

5. A coating composition as claimed in at least one of claims 1 to 4, wherein the amount of starting materials (A) is 10 to 40% by weight, of starting materials (B) 20 to 60% by weight, of starting materials (C) 0 to 20% by weight, of starting materials (D) 2 to 20% by weight, of starting materials (E) 0 to 50% by weight, and of starting materials (F) 0 to 10% by weight, each relative to the polyurethane resin, the percentages given adding up to 100%.

6. A coating composition as claimed in at least one of claims 1 to 5, wherein starting material (B) is derived from polyepoxides having epoxy equivalent weights of 180 to 2,000.

7. A coating composition as claimed in at least one of claims 1 to 6, wherein the compounds according to (D) are polyols containing at least one carboxyl group.

8. A coating composition as claimed in claim 7, wherein (D) contains an $\alpha,\alpha$-dimethylolalkanoic acid.

9. A coating composition as claimed in at least one of claims 1 to 8, wherein the compounds according to (F) are monoamines.

10. A coating composition as claimed in at least one of claims 1 to 9, wherein the compounds according to (F) are monoamines which additionally contain at least one -OH- group.

11. A coating composition as claimed in at least one of claims 1 to 10, wherein the aqueous coating composition additionally contains at least one further binder resin in an amount of up to 60% by weight, relative to the polyurethane resin.

12. A coating composition as claimed in claim 11, wherein the further binder resin is a water-insoluble, air-drying resin.

13. A coating composition as claimed in claim 12, wherein the further binder resin is a water-insoluble, air-drying alkyd resin.

14. A process for the preparation of a coating composition as claimed in at least one of claims 1 to 13, which comprises first preparing a polyurethane prepolymer from the polyisocyanates according to (A), the polyols according to (B) and, if desired, the polyols according to (C) and the compounds according to (D), which prepolymer contains on average at least 1.7 free isocyanate groups per molecule, then reacting this prepolymer with the compounds according to (E) and/or (F) in nonaqueous system, and then neutralizing the completely reacted polyurethane resin and transferring it into the aqueous system, it being possible for the further binder resins, if used, and the conventional additives to be added before, during or after the preparation of the polyurethane resin.

15. The process as claimed in claim 14, wherein the neutralization of the groups capable of anion formation is carried out with ammonia.

16. The use of a coating composition as claimed in at least one of claims 1 to 11 for the preparation of primers.

17. A substrate coated with a coating composition as claimed in at least one of claims 1 to 11.

**Claims for the following Contracting State : ES**

1. A process for the preparation of an aqueous coating composition which contains at least one water-dispersible polyurethane resin containing air-drying groups and, if desired, further binder resins and conventional (paint) additives, where the polyurethane resin can be prepared by reacting

   (A) polyisocyanates,
   (B) polyols containing groups which give the resulting polyurethane resin air-drying properties, and which are reaction products of polyepoxides or diepoxides with unsaturated fatty acids, if desired,
   (C) polyols which are free of such groups,
   (D) compounds having at least two groups which are reactive towards isocyanate groups and at least one group capable of anion formation,
   (E) monoalcohols containing unsaturated groups, and/or
   (F) compounds which differ from (B), (C), (D) and (E) and contain at least one group which is reactive towards NCO groups,

   which comprises first preparing a polyurethane prepolymer from the polyisocyanates according to (A), the polyols according to (B) and, if desired, the polyols according to (C) and the compounds according to (D), which prepolymer contains on average at least 1.7 free isocyanate groups per molecule, then reacting this prepolymer with the compounds according to (E) and/or (F) in nonaqueous system, and then neutralizing the completely reacted polyurethane resin and transferring it into the aqueous system, it being possible for the further binder resins, if used, and the conventional additives to be added before, during or after the preparation of the polyurethane resin.

2. A process as claimed in claim 1, wherein the amount of polyurethane resin in the aqueous coating composition is 5 to 40% by weight, relative to the entire coating composition.

3. A process as claimed in claim 1 and/or 2, wherein polyurethane resins having an average molecular weight $M_n$ of 1,600 to 30,000 are taken.

4. A process as claimed in at least one of claims 1 to 3, wherein a polyurethane resin is taken whose acid number is 10 to 80.

5. A process as claimed in at least one of claims 1 to 4, wherein the amount of starting materials (A) is 10 to 40% by weight, of starting materials (B) 20 to 60% by weight, of starting materials (C) 0 to 20% by weight, of starting materials (D) 2 to 20% by weight, of starting materials (E) 0 to 50% by weight, and of starting materials (F) 0 to 10% by weight, each relative to the polyurethane resin, the percentages given adding up to 100%.

6. A process as claimed in at least one of claims 1 to 5, wherein as starting material (B), polyepoxides having epoxy equivalent weights of 180 to 2,000 are taken.

7. A process as claimed in at least one of claims 1 to 6, wherein as compounds according to (D) polyols are taken containing at least one carboxyl group.

8. A process as claimed in claim 7, wherein as component (D) an $\alpha,\alpha$-dimethylolalkanoic acid is taken.

9. A process as claimed in at least one of claims 1 to 8, wherein as compounds according to (F) monoamines are taken.

10. A process as claimed in at least one of claims 1 to 9, wherein as compounds according to (F) monoamines are taken which additionally contain at least one -OH- group.

11. A process as claimed in at least one of claims 1 to 10, wherein to the aqueous coating composition is additionally added at least one further binder resin in an amount of up to 60% by weight, relative to the polyurethane resin.

12. A process as claimed in claim 11, wherein as further binder resin is added a water-insoluble, air-drying resin.

13. A process as claimed in claim 12, wherein as further binder resin is added a water-insoluble, air-drying alkyd resin.

14. The process as claimed in claim 1, wherein the neutralization of the groups capable of anion formation is carried out with ammonia.

15. The use of a coating composition prepared as claimed in at least one of claims 1 to 14 for the preparation of primers.

**Revendications**

**Revendications pour les Etats contractants suivants : AT, BE, CH, DE, DK, FR, GB, GR, IT, LI, NL, SE**

1. Masse de revêtement qui contient au moins une résine de polyuréthanne dispersable à l'eau contenant des groupes favorisant le séchage à l'air, ainsi que le cas échéant d'autres liants résineux et des additifs ordinaires pour laques, **caractérisée en ce que** la résine de polyuréthanne peut être préparée par réaction de

   (A) de polyisocyanates,
   (B) de polyols qui contiennent des groupes conférant à la résine de polyuréthanne obtenue des propriétés de séchage à l'air et les produits réactionnels proviennent de polyépoxydes ou diépoxydes avec des aci des gras insaturés,
   le cas échéant
   (C) des polyols qui sont exempts de ces groupes,
   (D) des composés qui présentent au moins deux groupes réactifs vis-à-vis des groupes isocyanate et au moins un groupe capable de former des anions,
   (E) des monoalcools qui contiennent des groupes insaturés, et/ou
   (F) des composés qui sont différents de (B), (C), (D) et (E) et qui contiennent au moins un groupe réagissant avec les groupes NCO.

2. Masse de revêtement selon la revendication 1, **caractérisée en ce que** la quantité de résine de polyuréthanne dans la masse de revêtement aqueuse est de 5 à 40 % en poids par rapport à la masse de revêtement totale.

**3.** Masse de revêtement selon les revendications 1 et/ou 2, **caractérisée en ce que** la résine de polyuréthanne présente une masse moléculaire moyenne $\overline{M}_n$ de 1 600 à 30 000.

**4.** Masse de revêtement selon au moins une des revendications 1 à 3, **caractérisée en ce que** l'indice d'acide de la résine de polyuréthanne est de 10 à 80.

**5.** Masse de revêtement selon au moins une des revendications 1 à 4, **caractérisé en ce que** la proportion des éduits (A) est de 10 à 40 % en poids, celle des éduits (B) de 20 à 60 % en poids, celle des éduits (C) de 0 à 20 % en poids, celle des éduits (D) de 2 à 20 % en poids, celle des éduits (E) de 0 à 50 % en poids et celle des éduits (F) de 0 à 10 % en poids, par rapport à chaque fois à la résine de polyuréthanne, les indications se complétant à 100 %.

**6.** Masse de revêtement selon au moins une des revendications 1 à 5, **caractérisée en ce que** l'éduit (B) dérive de polyépoxydes ayant des poids équivalents d'époxyde de 180 à 2 000.

**7.** Masse de revêtement selon au moins une des revendications 1 à 6, **caractérisée en ce que** les composés selon (D) sont des polyols qui contiennent au moins un groupe carboxyle.

**8.** Masse de revêtement selon la revendication 7, **caractérisée en ce que** (D) contient un acide $\alpha,\alpha$-diméthylolalcanoïque.

**9.** Masse de revêtement selon au moins une des revendications 1 à 8, **caractérisée en ce que** les composés selon (F) sont des monoamines.

**10.** Masse de revêtement selon au moins une des revendications 1 à 9, **caractérisée en ce que** les composés selon (F) sont des monoamines qui contiennent encore au moins un groupe OH.

**11.** Masse de revêtement selon au moins une des revendications 1 à 10, **caractérisée en ce que** la masse de revêtement aqueuse contient encore au moins un autre liant résineux dans une proportion allant jusqu'à 60 % en poids par rapport à la résine de polyuréthanne.

**12.** Masse de revêtement selon la revendication 11, **caractérisée en ce que** l'autre liant résineux est une résine insoluble dans l'eau, séchant à l'air.

**13.** Masse de revêtement selon la revendication 12, **caractérisée en ce que** l'autre liant résineux est une résine alkyde insoluble dans l'eau, séchant à l'air.

**14.** Procédé de préparation de la masse de revêtement selon au moins une des revendications 1 à 13, **caractérisé en ce qu'**on prépare d'abord à partir des polyisocyanates selon (A), des polyols selon (B) et le cas échéant des polyols selon (C) ainsi que des composés selon (D), un prépolymère de polyuréthanne qui contient en moyenne au moins 1,7 groupe isocyanato libre par molécule, puis **en ce qu'**on fait réagir ce prépolymère avec les composés selon (E) et/ou (F) dans un système non aqueux, et **en ce qu'**on neutralise ensuite la résine de polyuréthanne ayant complètement réagi, puis **en ce qu'**on la fait passer dans le système aqueux, les autres liants résineux éventuellement présents et les additifs habituels étant ajoutés avant, pendant ou après la préparation de la résine de polyuréthanne.

**15.** Procédé selon la revendication 14 **caractérisé en ce que** la neutralisation des groupes capables de former des anions est effectuée avec de l'ammoniaque.

**16.** Utilisation de la masse de revêtement selon au moins une des revendications 1 à 11 pour la confection de couches de fond.

**17.** Substrats enduits de la masse de revêtement selon au moins une des revendications 1 à 11.

**Revendications pour l'Etat contractant suivant : ES**

**1.** Procédé de préparation d'une masse de revêtement aqueuse qui contient au moins une résine de polyuréthanne dispersable à l'eau contenant des groupes favorisant le séchage à l'air, ainsi que le cas échéant d'autres liants résineux et des additifs ordinaires pour laques, **caractérisé en ce que** la résine de polyuréthanne peut être préparée par réaction de

(A) de polyisocyanates,
(B) de polyols qui contiennent des groupes conférant à la résine de polyuréthanne obtenue des propriétés de séchage à l'air, et les produits réactionnels proviennent de polyépoxydes ou diépoxydes avec des acides gras insaturés.
le cas échéant
(C) des polyols qui sont exempts de ces groupes,
(D) des composés qui présentent au moins deux groupes réactifs vis-à-vis des groupes isocyanato et au moins un groupe capable de former des anions,
(E) des monoalcools qui contiennent des groupes insaturés, et/ou
(F) des composés qui sont différents de (B), (C), (D) et (E) et qui contiennent au moins un groupe réagissant avec les groupes NCO,

**caractérisé en ce qu'**on prépare d'abord à partir des polyisocyanates selon (A), des polyols selon (B) et le cas échéant des polyols selon (C) ainsi que des composés selon (D), un prépolymère de polyuréthanne qui contient en moyenne au moins 1,7 groupe isocyanato libre par molécule, puis **en ce qu'**on fait réagir ce prépolymère avec les composés selon (E) et/ou (F) dans un système non aqueux et **en ce qu'**on neutralise ensuite la résine de polyuréthanne ayant complètement réagi, puis **en ce qu'**on la fait passer dans le système aqueux, les autres liants résineux éventuellement présents et les additifs habituels étant ajoutés avant, pendant ou après la préparation de la résine de polyuréthanne.

2. Procédé selon la revendication 1, **caractérisé en ce que** la proportion de résine de polyuréthanne dans la masse de revêtement est de 5 à 40 % en poids par rapport à la masse de revêtement totale.

3. Procédé selon les revendications 1 et/ou 2, **caractérisé en ce qu'**on utilise des résines de polyuréthanne ayant une masse moléculaire moyenne Mn de 1 600 à 30 000.

4. Procédé selon au moins une des revendications 1 à 3, **caractérisé en ce qu'**on utilise une résine de polyuréthanne dont l'indice d'acide est de 10 à 80.

5. Procédé selon au moins une des revendications 1 à 4, **caractérisé en ce que** la proportion des éduits (A) est de 10 à 40 % en poids, celle des éduits (B) de 20 à 60 % en poids, celle des éduits (C) de 0 à 20 % en poids, celle des éduits (D) de 2 à 20 % en poids, celle des éduits (E) de 0 à 50 % en poids et celle des éduits (F) de 0 à 10 % en poids, par rapport à chaque fois à la résine de polyuréthanne, les indications se complétant à 100 %.

6. Procédé selon au moins une des revendications 1 à 5, **caractérisé en ce que** l'on utilise comme éduit (B) des polyépoxydes ayant des poids équivalents d'époxyde de 180 à 2 000.

7. Procédé selon au moins une des revendications 1 à 6, **caractérisé en ce qu'**on utilise comme composés selon (D) des polyols qui contiennent au moins un groupe carboxyle.

8. Procédé selon la revendication 7, **caractérisé en ce que** l'on utilise comme constituant (D) un acide $\alpha,\alpha$-diméthylolalcanoïque.

9. Procédé selon au moins une des revendications 1 à 8, **caractérisé en ce que** l'on utilise comme composés selon (F) des monoamines.

10. Procédé selon au moins une des revendications 1 à 9, **caractérisé en ce que** l'on utilise comme composés selon (F) des monoamines qui contiennent en outre au moins un groupe OH.

11. Procédé selon au moins une des revendications 1 à 10, **caractérisé en ce que** l'on ajoute encore à la masse de revêtement aqueuse au moins un autre liant résineux dans une proportion allant jusqu'à 60 % en poids par rapport à la résine de polyuréthanne.

12. Procédé selon la revendication 11, **caractérisé en ce que** l'on ajoute comme autre liant résineux une résine insoluble dans l'eau, séchant à l'air.

**13.** Procédé selon la revendication 12, **caractérisé en ce que** l'on ajoute comme autre liant résineux une résine alkyde insoluble dans l'eau, séchant à l'air.

**14.** Procédé selon la revendication 1, **caractérisé en ce que** la neutralisation des groupes capables de former des anions s'effectue avec de l'ammoniaque.

**15.** Utilisation des masses de revêtement préparées selon au moins une des revendications 1 à 14 pour la préparation de couches de fond.